# EUROPEAN PATENT SPECIFICATION

(11) **EP 2 018 986 B1**
(45) Date of publication and mention of the grant of the patent: **04.05.2011**
(21) Application number: 08380163.9
(22) Date of filing: 29.05.2008
(51) Int. Cl.: B60H 1/34

(54) **Air diffuser for automobiles**
Luftdüse für Kraftfahrzeuge
Diffuseur d'air pour automobiles

(30) Priority: 25.07.2007 ES 200701587 U
(43) Date of publication of application: 28.01.2009
(73) Proprietor: Seat, S.A., 08760 Martorell, Barcelona (ES)
(72) Inventor: Martos Ortega, Antonio c/o Seat S.A., 08760 Martorell Barcelona (ES); Guardia Munuera, Pedro c/o Seat S.A., 08760 Martorell Barcelona (ES); Del Campo Malgarejo, Luis c/o Seat S.A., 08760 Martorell Barcelona (ES)
(74) Representative: Carvajal y Urquijo, Isabel

(56) References cited:
- EP-A1- 1 749 682
- EP-A2- 0 810 112
- EP-A2- 1 279 532
- US-A1- 2007 066 206

## Description

### Field of the Invention

The present invention relates to an air diffuser for automobiles intended to be assembled in openings of the panel of the automobile for allowing air to enter the interior of the automobile and for directing it in the desired direction.

### Background of the Invention

Air diffusers for automobiles are currently formed by a module, usually made of plastic, in which different gates controlling the air input flow are arranged. These gates are actuated by means of a rocker mechanism which, upon pressing one of the gates, rotates the gate assembly a certain angle, depending on the air flow required by the user or simply with a lever opening and closing the slats of the diffuser. The air flow can be oriented in a wide range for ensuring the aeration of the entire interior. In order to prevent the intrusion into the aeration circuit of the automobile of solid particles with sufficient size as to be able to obstruct said circuit, the diffuser is provided with a grate made in the same material as the module, blocking the entrance of the particles to the circuit.

The mentioned rocker mechanism has several drawbacks. The mechanism which allows the rocking of the gates is located behind same, causing a negative visual effect as well as a reduction of the aeration section and an interruption of the air flow. This mechanism does not allow establishing certain positions in opening the gates, therefore the adjustment is more complicated. The mechanism for opening the gates can describe a wide path, which implies that a series of stops limiting the radius of rotation and preventing breaks in the assembly must be integrated in the assembly. These stops are usually placed in the grate protecting against the intrusion of particles in the circuit, placed against the rib providing rigidity to the diffuser assembly.

Document US 2007/0066206, which is considered as the closest prior art, discloses an air diffuser for automobiles formed by two concentric rings.

### Description of the Invention

The object of the present invention is to solve the problems previously set forth by means of a diffuser allowing an excellent aeration inside the vehicle and furthermore an optimization of the design of the assembly and an aesthetic improvement.

The diffuser of the invention is formed by two concentric rings, the outer ring of which is fixed and has anchoring means for anchoring to the contour of the opening of the panel. The inner ring in turn rotates on its shaft, with respect to the outer ring, and bears two pivoting gates.

The rings have mutual axial retaining means which allow maintaining the inner ring inside the outer ring in a coupling position without risk of accidentally coming out. The inner ring can freely rotate with respect to the outer ring in this coupling position.

The two rings are further provided with elastic anchoring means between the two rings, by means of which the selected position of the inner ring with respect to the outer ring is ensured, such that said inner ring cannot move freely, but can move exerting a slight turning torque thereon. It is thus achieved that the position of the inner ring with respect to the outer ring can be selected at will by the user.

The gates of the inner ring are assembled thereon according to two parallel shafts, on which said gates can pivot between a closed position, in which they partially overlap and completely close the ring, and a maximum open position, in which they are in a considerable parallel position. The two gates have on one of their sides pivots traversing as many other arched grooves which the wall of the outer ring has, the curvature of these grooves coinciding with that described by the pivots during the rotation of the gates. On the outside of the wall of the inner ring the pivots are connected by means of an intermediate connecting rod provided with elastic anchoring means ensuring the position of the gates in the selected position.

With the mentioned constitution, the pivoting of the two gates occurs through the mentioned connecting rod upon actuating one of the gates. Furthermore the selected position of the gates is ensured by means of the mentioned elastic anchoring means, a slight pressure on any of the gates being sufficient for varying the position of both.

The axial retaining means between the two rings consist of a peripheral rib which the outer ring has internally and of small outer flanges which the inner ring has, which flanges are located immediately below the ring-shaped rib of the outer wall, in the coupling position of the two rings. During the assembly of the inner ring in the outer ring, the mentioned flanges go beyond the inner rib of the outer ring by elastic deformation of the rings and upon recovering their position, they are immediately behind the ring-shaped rib, thus preventing the inner ring from accidentally coming out, without preventing however the freedom of rotation thereof.

As regards the elastic anchoring means between the two rings, they consist of a crown-wheel which the outer ring has in an inner peripheral step and of a spring which the inner ring has externally assembled in a position opposing the crown-wheel, and which is supported between the teeth of said crown, fixing the position of the inner ring, this ring being retractable by means of applying a small turning torque on the inner ring.

The connecting rod connecting the pivots of the gates is straight and is located in an outer bevel which the inner ring has. The elastic anchoring means for anchoring said connecting rod are formed by an outer transverse grooving which the connecting rod has and a pin integral with the inner ring, which is supported between the teeth of the ribbing of the connecting rod and bends elastically. A system for anchoring the gates in the selected position is thus achieved, which allows however varying said position between the closed and open positions by simply slightly pressing one of the gates.

With the described constitution an excellent aesthetics of the diffuser and a good performance of the assembly are achieved, as the entire passage section of the inner ring is free of mechanisms for actuating and regulating the gates, which inner ring is located on one of the sides of the diffuser, out of sight from the users. The passage section for the air will be interrupted only by the thickness of the gates.

### Brief Description of the Drawings

The attached drawings show a non-limiting embodiment, with the aid of which the constitution, features and advantages of the diffuser of the invention will be better understood.

In the drawings:
Figure 1 is a perspective view of an air diffuser for automobiles formed according to the invention with the gates open.
Figure 2 is an exploded perspective view of the air diffuser of Figure 1.
Figure 3 shows a side elevational view of the inner ring of the air diffuser.
Figure 4 is a lower perspective view of the inner ring.
Figure 5 is a lower plan view of the inner ring.
Figure 6 is an upper plan view of the inner ring with the pivoting gates in the open position.
Figure 7 is a partial view of the inner ring, according to direction A of Figure 6.
Figure 8 is an upper plan view of the outer ring
Figure 9 is a diametric section of the inner ring, according to section line IX-IX of Figure 8, including part of the inner ring and trim hoop at 90°.
Figure 10 shows the air diffuser of Figure 1 in a side elevational view with the gates closed.
Figures 11 and 12 shown an upper plan view of the diffuser of Figure 1 with the gates open and closed respectively.
Figures 13 and 14 are diametric sections of the diffuser taken according to section lines XIII and XIV respectively of Figures 12 and 11.

### Detailed Description of an Embodiment

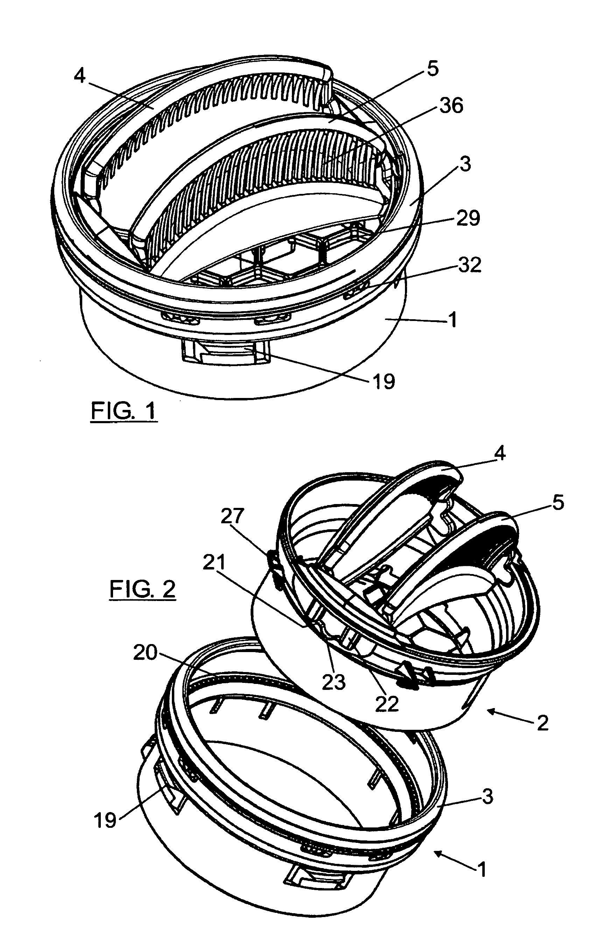

Figures 1 and 2 show an air diffuser for automobiles formed according to the invention, which diffuser is formed by an outer ring 1, an inner ring 2 and a trim hoop 3 which is assembled on the outer ring 1. The inner ring 2 bears two pivoting gates with reference numbers 4 and 5.

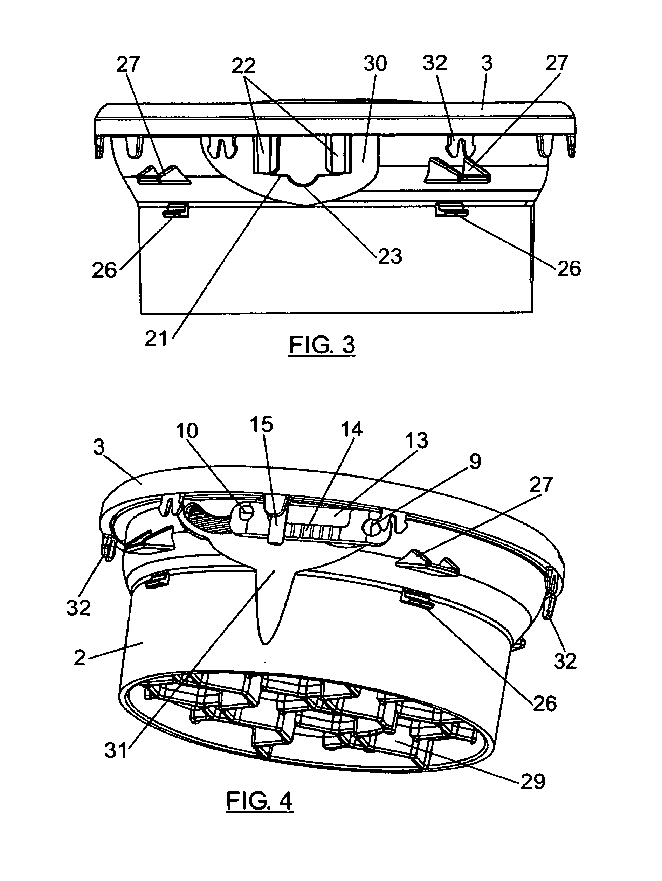

The inner ring is shown in Figures 3 to 7.

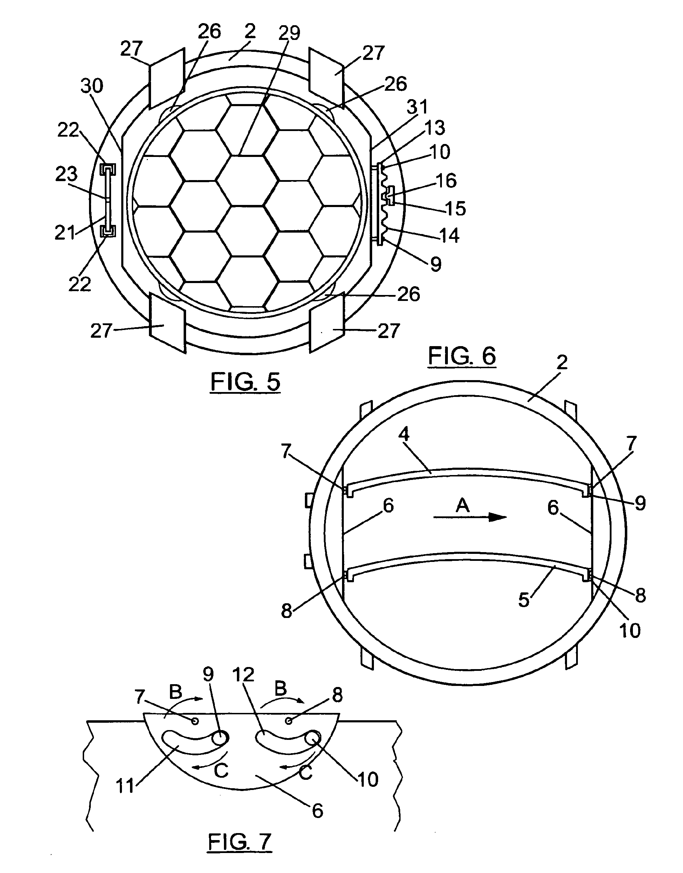

As can be seen in Figure 6, the inner ring 2 has two diametrically opposite and parallel planar areas 6 between which the gates 4 and 5 are assembled by means of parallel aligned shafts 7 and 8. The gates 4 and 5 have on one of their sides respective pivots 9 and 10 which, as can be better seen in Figure 7, traverse two arched grooves 11 and 12 made in the corresponding planar area 6 of the inner ring 2. These arched grooves 11 and 12 have a curvature coinciding with that described by the pivots 9 and 10 when the gates 4 and 5 pivot on the rotation shafts 7 and 9, respectively. When the gates 4 and 5 and their corresponding rotation shafts 7 and 8 rotate in the direction of arrow B of Figure 7, the pivots 9 and 10 move in the direction of arrows C of the same Figure 7, the gates passing from the open position of Figure 6 to the closed position.

The pivots 9 and 10 traverse the wall of the inner ring 2 through the grooves 11 and 12 and project externally in portions between which a connecting rod 13 is assembled, Figures 4 and 5, which connecting rod is straight and has on its outer surface a transverse ribbing 14. On this ribbing there is supported a pin 15 integral with the inner ring 2 having on its inner surface a rib 16 which can be introduced between the consecutive teeth of the toothing 14, the pin 15 being able to bend elastically in a transverse direction.

As the two gates 4 and 5 are connected by means of the connecting rod 13 through the pivots 9 and 10, by acting on any of the gates 4 or 5, the pivoting of both is achieved. In addition, there are elastic locking means for locking the gates 4 and 5 in the selected position by means of the toothing 14 and the pin 15, upon introducing the flange 16 of the pin 15 between consecutive teeth of the toothing 14, thus preventing the gates 4 and 5 from being able to accidentally move and a slight pressure on any of the gates being sufficient for achieving their pivoting, by means of the movement of the connecting rod 13 upon elastically bending the pin 15 towards the outside, thus going beyond the teeth of the toothing 14 in flange 16 of said pin.

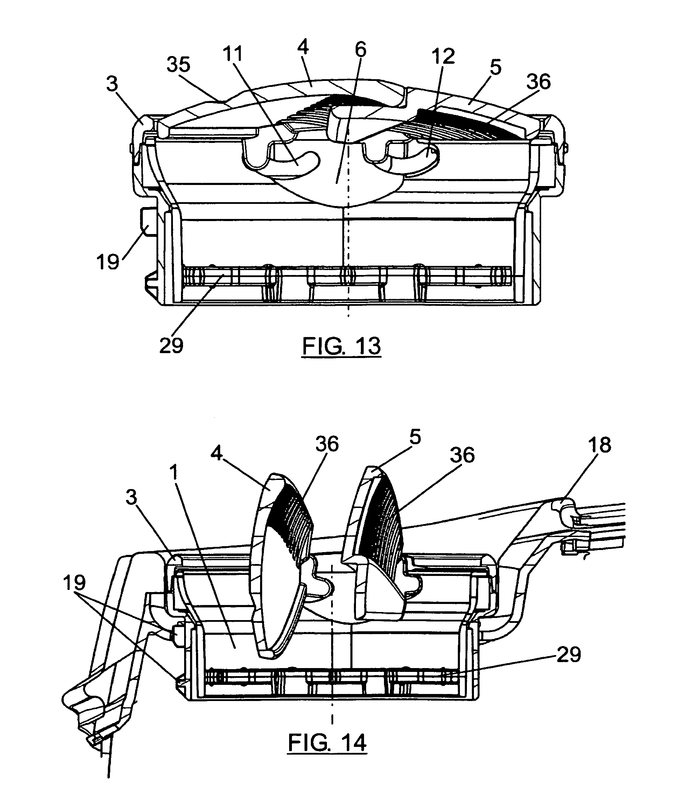

The outer ring 1 externally has anchoring means for anchoring to the opening of the panel 18, Figure 14, which means consist of flanges 19 projecting externally from said ring.

As can be seen in Figures 2, 8 and 9, the outer ring internally forms a step on which a crown-wheel 20 is cut, opposite which the inner ring 2 has a spring which in the example shown in the drawings is formed by a leaf spring 21 which is assembled between two supports 22 integral with the inner ring 2. This leaf spring has a projecting arched central section 23 which is supported on the crown 20, between consecutive teeth thereof, being used as axial elastic anchoring means for anchoring the two rings, as will be set forth below.

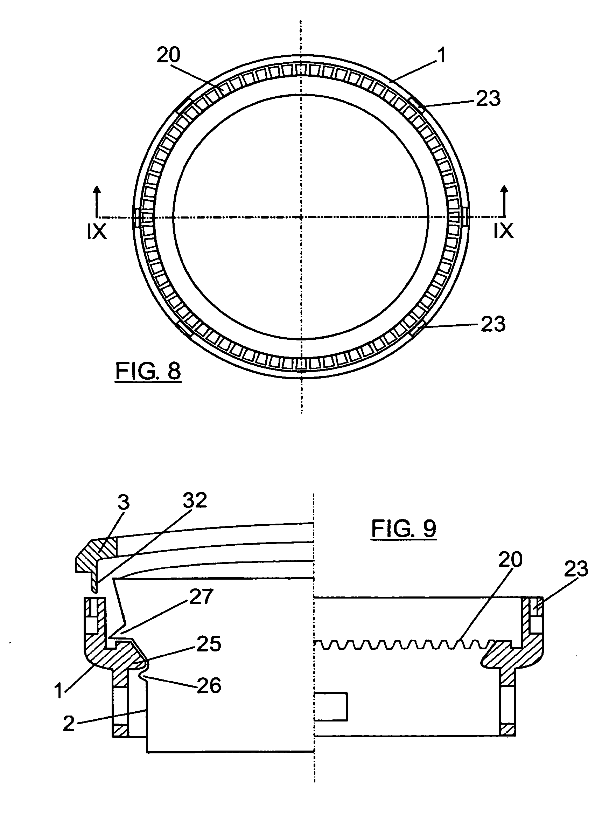

As can be seen in Figure 9, the outer ring 1 has, below the crown 20, a peripheral rib 25. The inner ring 2 in turn has on its outer surface small flanges 26 which are located immediately below the rib 25 of the ring 1 in order to be used as retaining means for retaining the inner ring in the outer ring in the coupling position.

A slight deformation of the two rings occurs in order to assemble the inner ring 2 in the outer ring 1, allowing the flanges 26 to go beyond the rib 25 and upon occupying their rest position, they prevent the ring 2 from being able to be removed from the ring 1. Flanges 27 also project from the outer surface of the inner ring 2, which flanges are located above the crown 20 of the outer ring 1 in order to be supported on the inner surface of said outer ring and be used as guide elements. Figure 3 shows the small flanges 26 which will be located below the crown 20 of the outer ring, and the larger flanges 27 which will be used as guide elements.

In the coupling position shown in Figure 3, in which the inner ring 2 is retained in the outer ring 1 by means of the small flanges 26, the spring defined by the leaf spring 21 is slightly compressed against the crown-wheel 20, such that the curved central portion 23 of said leaf spring penetrates between consecutive teeth of the toothing 20, being used as elastic anchoring means in order to ensure the selected position of the inner ring in the outer ring. The inner peripheral rib 25 of the outer ring 1 and the small outer flanges 26 of the inner ring 2 are in turn used as axial retaining means for retaining the inner ring in the outer ring, allowing however its free rotation.

The inner ring 2 has a grill 29 preventing the passage of elements which could obstruct the aeration conduits.

As can be seen in Figures 2, 3 and 5, the leaf spring 21 with supports 22 is arranged in an outer bevel 30 which the inner ring 2 has and which is parallel and diametrically opposite to a bevel 31, Figure 2, in which the connecting rod 13 is arranged.

As can be seen in Figure 3, pins 32 project from the trim hoop 3 at the lower part, which pins are intended to be introduced through grooves 33 of the outer ring 1, Figure 8, as can be better seen in Figures 9 and 13.

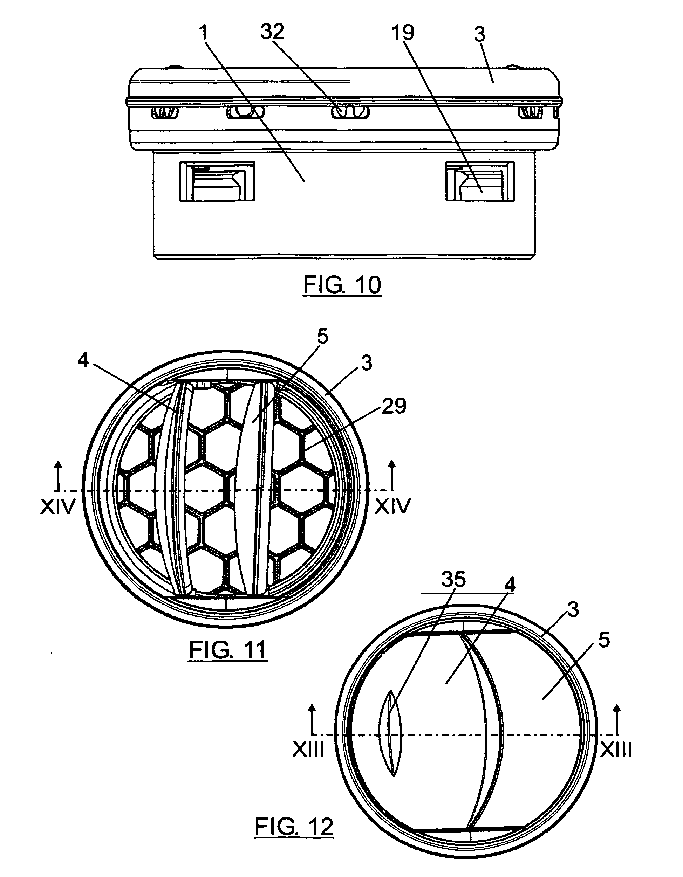

In order to facilitate the opening of the gates from their closed position, the gate 4 externally has a notch 35 which, upon pressing it, achieves the opening of the two gates from their closed position in Figures 12 and 13, a position in which the two gates partially overlap, whereas in the open position, as can be seen in Figures 1, 11 and 14, the two gates are considerably parallel.

Figure 10 shows a side view of the assembled assembly, with the trim hoop 3 fixed to the outer ring 1 by means of the pins 32 introduced through the grooves 33, Figure 8, of the outer hoop.

The gates 4 and 5 can have on their inner surface ribs 36 for driving the air flow.

In the diffuser of the invention, in order to open it from the closed position of Figures 12 and 13, it will be sufficient to press the notch 35 which, through the connecting rod 13, will make the two gates open at the same time to the desired position, in which they are locked as a result of the spring formed by the leaf spring 21. When the diffuser is to be closed, in order to prevent the passage of air into the vehicle, it will be enough to gently press the surface of the slat 5, which will cause the movement with respect to the rotation shaft thereof, the two gates returning to the initial closed position, through the already mentioned connecting rod. The inner ring 2 must be rotated in order to make a correct adjustment of the direction of the air flow, moving the assembly with the finger to the desired position or rotating any of the slats when they are open.

## Claims

1. An air diffuser for automobiles intended to be assembled in an opening of the panel of the automobile, formed by two concentric rings, a fixed outer ring (1) provided with anchoring means (19) for anchoring to the contour of the opening of the panel, and another inner ring (2) rotating on its shaft, bearing two pivoting gates (4 and 5); which rings have mutual axial retaining means (25, 26) for retaining in a coupling position in which they allow the rotation of the inner ring, and elastic anchoring means (20, 21, 22, 23) between the two rings ensuring the selected position of the inner ring, with respect to the outer ring; which gates (4 and 5) are assembled inside the inner ring 2 according to two parallel shafts (7 and 8) on which they can pivot between a closed position, in which they partially overlap and close the ring, and, a maximum open position, in which they are in a considerably parallel position, **characterized in that** the two gates having on one of the sides respective pivots (9 and 10) traversing as many other arched grooves (11 and 12) which the wall of the inner ring has, with a curvature coinciding with that described by the pivots during the rotation of the gates, and connected by means of an intermediate connecting rod (13) provided with elastic anchoring means ensuring the position of the gates in the selected position.

2. The diffuser according to claim 1, **characterized in that** the mutual axial retaining means for retaining the two rings consist of an inner peripheral rib (25) which the outer ring has and of small outer flanges (26) which the inner ring (2) has which are located below the ring-shaped rib (25) of the outer wall in the coupling position of the two rings.

3. The diffuser according to claim 1, **characterized in that** the elastic anchoring means between the two rings consist of a crown-wheel (20) which the outer ring 1 has in an inner peripheral step, and of a spring which the inner ring has externally assembled in a position opposing the crown-wheel, which is supported between the teeth of said crown.

4. The diffuser according to claim 3, **characterized in that** the mentioned spring consists of a leaf spring (21) parallel to the crown-wheel (20), which is assembled at its ends between supports (22) formed in an outer bevel (30) of the inner ring, which leaf spring has a projecting arched central section (23) which is supported on the crown.

5. The diffuser according to claim 1, **characterized in that** the connecting rod (13) connecting the pivots (9 and 10) of the gates is straight and is arranged in an outer bevel (31) which the inner ring (2) has, the elastic anchoring means of said connecting rod being formed by an outer transverse ribbing (14) which the connecting rod has and a pin (15) integral with the inner ring (2), which is supported between the teeth of the ribbing (14) of the connecting rod and bends elastically.

6. The diffuser according to claim 1, **characterized in that** the two outer bevels (30 and 31) of the inner ring are located in diametrically opposite positions coinciding therewith and said ring internally has respective parallel planar areas (6) between which the gates (4 and 5) are assembled and in which the arched grooves (11 and 12) are made.

## Patentansprüche

1. Luftverteiler für Kraftfahrzeuge, der zum Montieren in einer Öffnung des Blechs des Kraftfahrzeugs bestimmt ist und durch zwei konzentrische Ringe ausgebildet ist, einem starren Außenring (1), der mit Verankerungsmitteln (19) zum Verankern am Umriss der Öffnung des Blechs versehen ist, und einem weiteren Innenring (2), der auf seiner Welle dreht und zwei Schwenkklappen (4 und 5) trägt; wobei die Ringe gegenseitige axiale Haltemittel (25, 26) zum Halten in einer Kupplungsposition, in der sie die Drehung des Innenrings ermöglichen, und elastische Verankerungsmittel (20, 21, 22, 23) zwischen den zwei Ringen aufweisen, die die ausgewählte Position des Innenrings bezüglich des Außenrings gewährleisten; wobei die Klappen (4 und 5) innerhalb des Innenrings 2 entsprechend zweier paralleler Wellen (7 und 8) montiert sind, auf denen sie zwischen einer geschlossenen Position, in der sie sich teilweise überdecken und den Ring schließen, und einer maximal offenen Position schwenken können, in der sie sich in einer deutlich parallelen Position befinden, **dadurch gekennzeichnet, dass** die zwei Klappen auf einer der Seiten jeweilige Drehpunkte (9 und 10) aufweisen, die genauso viele andere bogenförmige Nute (11 und 12) durchlaufen, die die Wand des Innenrings aufweist, mit einer Krümmung, die jener entspricht, welche von den Drehpunkten während des Drehens der Klappen beschrieben ist, und mithilfe einer zwischenliegenden Verbindungsstange (13) verbunden, die mit elastischen Verankerungsmitteln versehen ist, welche die Position der Klappen in der ausgewählten Position gewährleisten.

2. Verteiler nach Anspruch 1, **dadurch gekennzeichnet, dass** die gegenseitigen axialen Haltemittel zum Halten der Ringe aus einer Innenumfangsrippe (25), die der Außenring aufweist, und kleinen Außenflanschen (26) bestehen, die der Innenring (2) aufweist und die sich unter der ringförmigen Rippe (25) der Außenwand in der Kupplungsposition der zwei Ringe befinden.

3. Verteiler nach Anspruch 1, **dadurch gekennzeichnet, dass** die elastischen Verankerungsmittel zwischen den zwei Ringen aus einem Kronrad (20), das der Außenring (1) in einer Innenumfangsstufe aufweist, und einer Feder bestehen, die der Innenring außen in einer Position gegenüber dem Kronrad montiert aufweist und zwischen den Zähnen der Krone gestützt ist.

4. Verteiler nach Anspruch 3, **dadurch gekennzeichnet, dass** die angegebene Feder aus einer Blattfeder (21) parallel zu dem Kronrad (20) besteht, die an ihren Enden zwischen Stützen (22) montiert ist, welche in einer äußeren Abschrägung (30) des Innenrings ausgebildet sind, wobei die Blattfeder einen vorspringenden, bogenförmigen mittleren Teilabschnitt-(23) aufweist, der auf der Krone gestützt ist.

5. Verteiler nach Anspruch 1, **dadurch gekennzeichnet, dass** die Verbindungsstange (13), die die Drehpunkte (9 und 10) der Klappen verbindet, gerade ist und in einer äußeren Abschrägung (31), die der Innenring (2) aufweist, angeordnet ist, wobei die elastischen Verankerungsmittel der Verbindungsstange durch eine äußere, quer verlaufende Verrippung (14), die die Verbindungsstange aufweist, und einen mit dem Innenring (2) einstückigen Stift (15) ausgebildet sind, der zwischen den Zähnen der Verrippung (14) der Verbindungsstange gestützt ist und sich elastisch biegt.

6. Verteiler nach Anspruch 1, **dadurch gekennzeichnet, dass** sich die zwei äußeren Abschrägungen (30 und 31) des Innenrings in diametral entgegengesetzten Positionen damit übereinstimmend befinden, und der Ring innen jeweilige parallele plane Bereiche (6) aufweist, zwischen denen die Klappen (4 und 5) montiert sind und in denen die bogenförmigen Nute (11 und 12) hergestellt sind.

## Revendications

1. Un diffuseur d'air pour automobile conçu pour être monté dans une ouverture du tableau de bord de l'automobile, formé de deux anneaux concentriques, un anneau externe fixe (1) doté de moyens d'ancrage (19) pour sa fixation au contour de l'ouverture du tableau de bord, et un autre anneau interne (2) tournant sur son axe, supportant deux vannes pivotantes (4 et 5) ; dont les anneaux ont des moyens de rétention placés dans un axe réciproque (25, 26) pour les tenir dans une position d'assemblage permettant la rotation de l'anneau interne, et des moyens de fixation élastiques (20,21,22,23) entre les deux anneaux assurant la position sélectionnée de l'anneau interne, par rapport à l'anneau externe ; dont les vannes (4 et 5) sont montées à l'intérieur de l'anneau interne (2) suivant deux tiges parallèles (7 et 8) sur lesquelles elles peuvent pivoter entre une position fermée, dans laquelle elles se recouvrent partiellement, et une position ouverte au maximum, dans laquelle elles se retrouvent dans une position fortement parallèle, **caractérisé en ce que** les deux vannes ont sur un des côtés des pivots respectifs (9 et. 10) traversant plusieurs rainures incurvées (11 et 12) disposées sur la paroi de l'anneau interne, avec une incurvation correspondant à celle décrite par les pivots pendant la rotation des vannes, et raccordés au moyen d'une barre de connexion intermédiaire (13) dotée de moyens de fixation élastiques assurant la position des vannes dans la position sélectionnée.

2. Le diffuseur selon la revendication 1, **caractérisé en ce que** les moyens de rétention placés dans un axe réciproque pour retenir les deux anneaux consistent en une nervure périphérique interne (25) dont est doté l'anneau externe, et en de petites protubérances externes (26) dont est doté l'anneau interne (2), qui sont situées sous la nervure circulaire (25) de la paroi externe dans la position d'accouplement des deux anneaux.

3. Le diffuseur selon la revendication 1, **caractérisé en ce que** les moyens de fixation élastiques entre les deux anneaux consistent en une roue de couronne (20) que l'anneau externe (1) possède sur une marche périphérique interne et en un ressort monté sur l'extérieur de l'anneau interne dans une position opposée à la roue de couronne, qui est supporté entre les dents de cette couronne.

4. Le diffuseur selon la revendication 3, **caractérisé en ce que** le ressort cité consiste en un ressort à lame (21) parallèle à la roue de couronne (20), qui est assemblé à son extrémité entre des supports (22) formés sur,un chanfrein externe (23) de l'anneau interne, ce ressort à lame ayant une partie centrale cintrée en saillie (23) qui est supportée sur la couronne.

5. Le diffuseur selon la revendication 1, **caractérisé en ce que** la barre de connexion (13) raccordant les pivots (9 et 10) des vannes est droite et est disposée dans un chanfrein extérieur (31) dont est doté l'anneau interne (2), les moyens de fixation élastiques de cette barre de connexion étant formés d'un sillon transversal externe (14) dont est dotée la barre de connexion et d'une broche (15) intégrée à l'anneau interne (2), qui est supportée entre les dents du sillon (14) de la barre de connexion et qui plie de manière élastique.

6. Le diffuseur selon la revendication 1, **caractérisé en ce que** les deux chanfreins extérieurs (30 et 31) de l'anneau interne sont situés dans des positions diamétralement opposées coïncidant l'un par rapport à l'autre et **en ce que** cet anneau possède à l'intérieur des surfaces parallèles planes respectives (6) entre lesquelles les vannes (4 et 5) sont montées et dans lesquelles les rainures incurvées (11 et 12) sont réalisées.
